# EUROPEAN PATENT SPECIFICATION

(11) **EP 0 662 901 B1**
(45) Date of publication and mention of the grant of the patent: **13.03.1996**
(21) Application number: 93920762.7
(22) Date of filing: 18.09.1993
(51) Int. Cl.: B62D 25/14, B62D 29/00, B60H 1/24

(54) **DASHBOARD FOR A MOTOR VEHICLE**
ARMATURENBRETT FÜR EIN KRAFTFAHRZEUG
TABLEAU DE BORD POUR VEHICULE A MOTEUR

(30) Priority: 30.09.1992 DE 4232847
(43) Date of publication of application: 19.07.1995
(73) Proprietor: AUDI AG, D-85045 Ingolstadt (DE)
(72) Inventor: PASCH, Erich, D-74172 Neckarsulm-Obereisesheim (DE); ZUSCHANKO, Hans, D-74172 Neckarsulm (DE); VORTANZ, Carsten, D-74861 Neudenau (DE)
(86) International application number: EP9302529
(87) International publication number: WO9407733

(56) References cited:
- DE-A- 4 016 670
- DE-U- 1 929 373
- FR-A- 2 669 885
- US-A- 4 365 826
- US-A- 4 723 792

## Description

The invention relates to a dashboard for a motor vehicle according to the preamble of Claim 1.

In a known dashboard of this kind (German Auflegeschrift 12 39 583) the instrument panel composed of three parts is mounted on the cross-bearer and, in addition to openings for the reception of a glove compartment, instruments, radio and the like, contains air ducts leading to defrosting nozzles for the windscreen. The connection of these ducts to a heating or air-conditioning apparatus and also ducts and air outlet openings, through which fresh or heating air can flow into the interior of the vehicle, are not shown. From German Offenlegungsschrift 34 07 670 a dashboard is known which comprises a baseplate extending substantially over the full width of the passenger compartment and having front, back and top wall parts conjointly delimiting a plurality of air ducts which lie one above the other and from which air can flow through corresponding openings o the interior of the vehicle and to the wind-screen. This dashboard is not only expensive to manufacture, but also has the disadvantage that the heating air first heats the dashboard, and is thus cooled, before it flows into the interior of the vehicle, and that while the vehicle is still cold it is possible for condensed water to be deposited from the heating air on the walls of the ducts and, in certain circumstances, to drip out of the air outlet openings.

The object of the invention is to provide a dashboard of the type defined which has a relatively simple construction and with which cooling of the heating air and condensation of water are avoided. According to the invention this object is achieved by the features indicated in the characterizing part of Claim 1.

According to the proposal made by the invention, the cross-bearer is a simple component. Owing to the fact that the air ducts provided in the cross-bearer are formed by individual pipes made of flexible plastics material, it is made impossible for heat to be taken from the heating air by heat transfer to the cross-bearer and for water from the heating air to condense on the cold walls of the cross-bearer while the vehicle is still cold. Owing to the fact that the instrument panel as an individual component completely covers the cross-bearer, not only is the aesthetic appearance improved, but it is also possible for the instrument panel to be produced as a preassembled unit with all instruments and fittings and also with the air outlet nozzles, while the air outlet nozzles are connected to the ends of the pipes, inserted into the cross-bearer, by laying the instrument panel on the cross-bearer, without any assembly work being required.

Because of their material, the pipes used to conduct the air already constitute good thermal insulation for the heating air. This thermal insulation can be further improved if the pipes are provided on their outer surfaces with projections which keep the pipes at a distance from the inside surface of the cross-bearer.

On account of the flexibility of the pipes, which are made of plastics material, they can be inserted without difficulty from the middle cutout into the side regions of the cross-bearer until their outer ends are in line with the apertures at the ends of the cross-bearer. To facilitate the connection of these pipes to the heating or air-conditioning apparatus arranged in the cutout, it is expedient for each pipe to be of bellows-like construction near its inner end, so that these inner ends Can be pushed slightly outwards when the heating or air-conditioning apparatus is inserted or - if the heating or air-conditioning apparatus has been installed previously - when the cross-bearer is inserted, and can then be fitted onto the side connections of the heating or air-conditioning apparatus.

The cross-bearer preferably comprises a middle part of approximately L-shaped cross-section and two side parts of polygonal cross-section which are attached thereto and receive the pipes, while the gap between the inner ends of the side parts serves to receive the heating or air-conditioning apparatus. All the parts of the cross-bearer may be formed by light metal extruded sections, which are welded together.

An exemplary embodiment of the invention is described below with reference to the drawings, in which:
Figure 1 is an exploded view in perspective of a dashboard,
Figure 2 is a partial horizontal longitudinal section of the cross-bearer with a pipe inserted,
Figure 3 is a section along the line 3-3 in Figure 2 on a larger scale, and
Figure 4 is a view in perspective of a pipe.

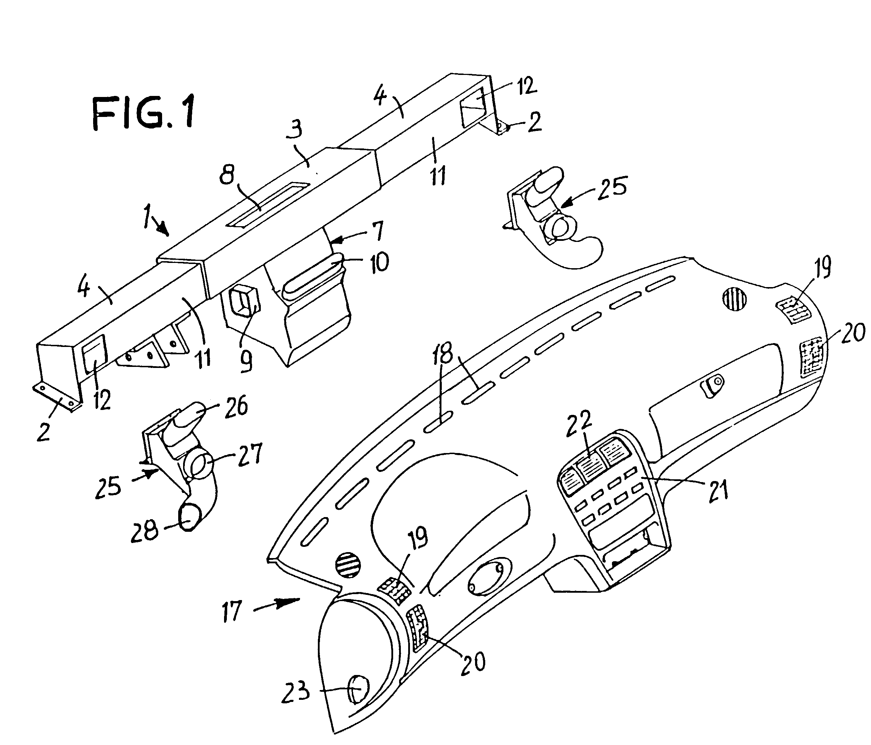

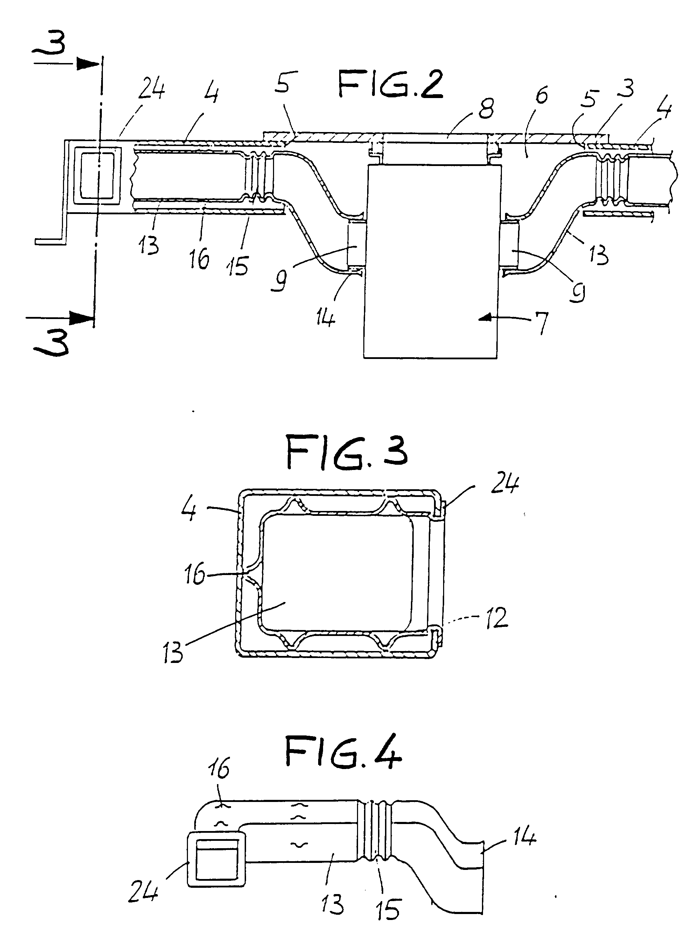

The dashboard shown in Figure 1 has a cross-bearer 1 which extends over the entire width of the interior of the vehicle and at its ends 2 is bolted to the A-posts of the vehicle body. It comprises an approximately L-shaped middle part 3 and side parts 4 having a box-shaped profile. The parts 3 and 4 preferably comprises light metal extruded sections, which are welded together, while, as can be seen in Figure 2, the inner ends 5 of the side parts 4 lie at a distance from one another, so that a gap 6 is formed, which is covered over by the middle part 3 and into which projects a heating or air-conditioning apparatus 7 fastened to the front bulkhead of the vehicle. The apparatus 7 has a top throughflow opening, which is in line with an air passage opening 8 in the middle part 3 of the cross-bearer, and also side outlet connections 9 and a middle outlet opening 10. Each side part 4 of the cross-bearer is provided at its outer end with an aperture 12 in the front side 11 facing the interior of the vehicle. As can be seen in Figure 2, into each side part 4 a pipe 13 is inserted which is made of flexible plastics material and extends from the aperture 12 to one of the air outlet connections 9 of the heating or air-conditioning apparatus 7 and at their inner ends have a collar 14 which is fitted onto the connection 9. In order to facilitate this operation, each pipe 13 has, near its inner end, a portion 15 which is in the form of a bellows and which permits axial movement of the inner end of the pipe 13. The pipes 13 have been omitted in Figure 1 for the sake of clarity.

Because the heating air is conducted through the pipes 13, it cannot come into contact with the inside surface of the side parts 4 of the cross-bearer, so that it is made impossible for heat to be taken from the heating air by heat transfer to the side parts 4 of the cross-bearer and for condensed water from the heating air to be deposited on the cold walls of the side parts 4 when the vehicle is cold. The thermal insulation can be further intensified if, as shown in Figures 2 and 3, projections 16 are provided on the outer surface of each pipe 13 to serve as spacers between the pipe 13 and the inside surface of the cross-bearer side parts 4 and to form an insulating air gap.

A preassembled instrument panel 17 is fastened on the cross-bearer 1, completely covering the latter and already containing essentially all its fittings, including, inter alia, defroster nozzles 18, side outlet nozzles 19 and 20, and the control apparatus 21 for the heating or air-conditioning apparatus 7 with its central outlet nozzles 22, and side through openings 23 through which heating or cooling air is conducted into the front doors of the motor vehicle and from there into the rear compartment. For the connection of the outlet opening 24 of each pipe 13 to the outlet nozzles or outlet openings 19, 20, 23 a distributor 25 (Figure 1) is provided, which is fitted on the outer end of the cross-bearer side part 4 and has branches 26, 27 and 28 which, when the instrument panel 17 is mounted on the cross-bearer 1, are connected to the outlet openings 19, 20, 23. The air passage opening 8 in the middle part 3 of the cross-bearer is then also connected to a duct from which the defroster nozzles 18 lead out, and the air outlet opening 10 of the heating or air-conditioning apparatus 7 is connected to the middle outlet nozzles 22.

In the exemplary embodiment, the cross-bearer 1 is composed of the middle part 3 and the side parts 4, which are welded together. The cross-bearer could, of course, also comprise a single hollow body, which is then provided in the middle region with a cutout, corresponding to the gap 6, to receive the heating or air-conditioning apparatus 7.

## Claims

1. Dashboard for a motor vehicle, comprising a cross-bearer (1), which extends over the width of the interior of the vehicle, and an instrument panel (17) fastened thereto, and comprising ducts for supplying fresh air or conditioned air to the interior of the vehicle, characterized in that the cross-bearer (1) comprises a box-shaped hollow section, has in the middle region a cutout (6) in its bottom bounding wall to receive a heating or air-conditioning apparatus (7) and in its top bounding wall at least one air passage opening (8), and is provided at each of its ends with an aperture (12), in that two pipes (13) are inserted into the cross-bearer which are made of flexible plastics material and extend in each case from an aperture (12) at one end of the cross-bearer to the cutout (6) and at their inner ends have a collar (14) for connection to the heating or air-conditioning apparatus (7), and in that the instrument panel (17) covers the cross-bearer on the vehicle interior side and is provided with air outlet openings (18, 19, 20, 22, 23) which are in communication with the air passage opening (8) in the cross-bearer (1) or with the outer ends (24) of the pipes (13).

2. Dashboard according to Claim 1, characterised in that each pipe (13) is provided on its outer surface with projections (16) to form a space between the pipe and the inside surface of the cross-bearer.

3. Dashboard according to Claim 1 or 2, characterised in that each pipe (13) has, near its inner end, a portion (15) having a bellows-like configuration.

4. Dashboard according to one of Claims 1 to 3, characterised in that the pipes (13) are blow mouldings of a polyethylene having a low density and high elasticity.

5. Dashboard according to Claim 1, characterised in that the cross-bearer (1) comprises a middle part (3) of approximately L-shaped cross-section and two side parts (4) of polygonal cross-section which are attached thereto and receive the pipes (13), while, between the inner ends of the side parts, a gap (6) is provided to receive the heating or air-conditioning apparatus (7).

6. Dashboard according to Claim 5, characterised in that the middle part (3) and the side parts (4) comprise light metal extruded sections, which are welded together.

## Patentansprüche

1. Armaturenbrett für ein Kraftfahrzeug, mit einem sich über die Breite des Fahrzeuginnenraumes erstreckenden Querträger (1) und einer an diesem befestigten Instrumententafel (17), und mit Kanälen zur Zuführung von Frischluft oder klimatisierter Luft zum Fahrzeuginnenraum,
**dadurch gekennzeichnet,**
daß der Querträger (1) aus einem kastenförmigen Hohlprofil besteht, im mittleren Bereich in seiner unteren Begrenzungswand einen Ausschnitt (6) zur Aufnahme eines Heizoder Klimagerätes (7) und in seiner oberen Begrenzungswand mindestens eine Luftdurchtrittsöffnung (8) aufweist und an jedem seiner Enden mit einem Durchbruch (12) versehen ist, daß in den Querträger zwei aus einem flexiblen Kunststoff bestehende Rohrleitungen (13) eingesetzt sind, die sich jeweils von einem Durchbruch (12) an einem Ende des Querträgers zu dem Ausschnitt (6) erstrecken und an ihren inneren Enden einen Kragen (14) zur Verbindung mit dem Heiz- oder Klimagerät (7) aufweisen, und daß die Instrumententafel (17) den Querträger zum Fahrzeuginnenraum hin abdeckt und mit Luftaustrittsöffnungen (18, 19, 20, 22, 23) versehen ist, die mit der Luftdurchtrittsöffnung (8) im Querträger (1) bzw. mit den äußeren Enden (24) der Rohrleitungen (13) in Verbindung stehen.

2. Armaturenbrett nach Anspruch 1, dadurch gekennzeichnet, daß jede Rohrleitung (13) an ihrer Außenfläche mit Vorsprüngen (16) zur Abstandshalterung zwischen der Rohrleitung und der Innenfläche des Querträgers versehen ist.

3. Armaturenbrett nach Anspruch 1 oder 2, dadurch gekennzeichnet, daß jede Rohrleitung (13) nahe ihres inneren Endes einen nach Art eines Faltenbalges ausgebildeten Abschnitt (15)aufweist.

4. Armaturenbrett nach einem der Ansprüche 1 bis 3, dadurch gekennzeichnet, daß die Rohrleitungen (13) Blasformteile aus einem Polyäthylen mit niedriger Dichte und hoher Elastizität sind.

5. Armaturenbrett nach Anspruch 1, dadurch gekennzeichnet, daß der Querträger (1) aus einem im Querschnitt etwa L-förmigen Mittelteil (3) und zwei an diesen angesetzte, die Rohrleitungen (13) aufnehmenden, im Querschnitt mehreckigen Seitenteilen (4) besteht, wobei zwischen den inneren Enden der Seitenteile ein Zwischenraum (6) zur Aufnahme des Heiz- oder Klimagerätes (7) vorgesehen ist.

6. Armaturenbrett nach Anspruch 5, dadurch gekennzeichnet, daß das Mittelteil (3) und die Seitenteile (4) aus Leichtmetall- Strangpreßprofilen bestehen, die miteinander verschweißt sind.

## Revendications

1. Tableau de bord pour véhicule à moteur, comprenant un support transversal (1) qui s'étend sur toute la largeur de l'intérieur du véhicule et une planche de bord (17) fixée à ce support, et comportant des conduits d'alimentation de l'intérieur du véhicule en air frais ou en air conditionné, caractérisé en ce que le support transversal (1) est constitué par un profilé creux en caisson, présente, dans la région médiane, une découpure (6) dans sa paroi inférieure pour recevoir un appareil (7) de chauffage ou de conditionnement d'air et, dans sa paroi supérieure, au moins une ouverture de passage d'air (8), et est percé d'une ouverture (12) à chacune de ses extrémités, en ce qu'il est inséré, dans le support transversal, deux tuyaux (13) qui sont faits de matière plastique flexible, s'étendent chacun depuis une ouverture (12) à une extrémité du support transversal jusqu'à la découpure (6) et comportent, à leur extrémité interne, un collier (14) pour leur jonction à l'appareil (7) de chauffage ou de conditionnement d'air, et en ce que la planche de bord (17) recouvre le support transversal du côté de l'intérieur du véhicule et est munie d'orifices de sortie d'air (18,19,20,22,23) qui sont en communication avec l'ouverture de passage d'air (8) dans le support transversal (1) ou avec les extrémités externes (4) des tuyaux (13).

2. Tableau de bord selon la revendication 1, caractérisé en ce que chaque tuyau (13) est muni, sur sa surface extérieure, de saillies (16) pour créer un espace entre le tuyau et la surface interne du support transversal.

3. Tableau de bord selon la revendication 1 ou 2, caractérisé en ce que chaque tuyau (13) comporte, prés de son extrémité interne, une partie (15) ayant une configuration semblable à celle d'un soufflet.

4. Tableau de bord selon l'une quelconque des revendications 1 à 3, caractérisé en ce que les tuyaux (13) sont des pièces produites par extrusion-soufflage en un polyéthylène ayant une faible densité et une élasticité élevée.

5. Tableau de bord selon la revendication 1, caractérisé en ce que le support transversal (1) comprend une partie médiane (3) ayant approximativement une section en L et deux parties latérales (4) de section polygonale qui sont fixées à cette partie médiane et reçoivent les tuyaux (13), tandis qu'un espace (6) est ménagé entre les extrémités internes des parties latérales pour recevoir l'appareil (7) de chauffage ou de conditionnement d'air.

6. Tableau de bord selon la revendication 5, caractérisé en ce que la partie médiane (3) et les parties latérales (4) sont constituées par des profilés filés en métal léger qui sont unis par soudage.
